# EUROPÄISCHE PATENTANMELDUNG

(11) **EP 3 560 665 A1**
(43) Veröffentlichungstag der Anmeldung: **30.10.2019**
(21) Anmeldenummer: 19163029.2
(22) Anmeldetag: 15.03.2019
(51) Int. Cl.: B25J 15/00, B25J 15/02, B25J 15/08, B60B 30/06

(54) **FELGENGREIFER**

(30) Priorität: 26.04.2018 DE 102018110144
(71) Anmelder: Pflueger Praezision GmbH, 71665 Enzweihingen (DE)
(72) Erfinder: Butz, Peter, 75428 Illingen (DE); Mühlbradt, Karsten, 18119 Rostock (DE)
(74) Vertreter: Witte, Weller & Partner Patentanwälte mbB

(57) **Zusammenfassung**

Es wird ein Felgengreifer mit einem Flansch (12) angegeben, zur Befestigung an einer Handhabungseinrichtung, wie etwa einem Roboterarm, an dem mindestens ein Felgengreifermodul (14, 16) aufgenommen ist, wobei jedes Felgengreifermodul (14, 16) einen länglichen Grundkörper (20) aufweist, an dem mindestens eine sich parallel zu einer Längsrichtung des Grundkörpers erstreckende Linearführung (22) aufgenommen ist, wobei mindestens ein erster entlang der Linearführung (22) mittels eines elektrischen Antriebs (28) verfahrbarer Ausleger (26) vorgesehen ist, an dessen äußerem Ende ein erstes Haltemodul (27) für eine Felge gehalten ist, und wobei mindestens ein entlang der Linearführung (22, 56) mittels eines elektrischen Antriebs (28, 30) verfahrbarer zweiter Ausleger (32) vorgesehen ist, an dessen äußerem Ende ein zweites Haltemodul (33) für eine Felge gehalten ist. (Fig. 1)

## Beschreibung

Die Erfindung betrifft einen Felgengreifer mit einem Flansch zur Befestigung an einer Handhabungseinrichtung, wie etwa einem Roboterarm, an dem mindestens ein Felgengreifermodul aufgenommen ist, und wobei an jedem Felgengreifermodul ein erstes und ein zweites Haltemodul zur Aufnahme einer Felge zueinander verfahrbar aufgenommen sind.

Ein derartiger Felgengreifer ist durch Benutzung bekannt geworden und wird von der Firma Eisenmann Anlagenbau GmbH & Co. KG, Böblingen, vertrieben. Der betreffende Felgengreifer weist einen pneumatischen Antrieb auf und ist für unterschiedliche Radgrößen anpassbar.

Der pneumatische Antrieb des Felgengreifers weist eine Reihe von Nachteilen auf:
Bei Ausfall der Pneumatik ist eine automatische Bremse erforderlich. Die Pneumatikversorgung ist aufwändig und führt zu hohen Kosten. Pneumatikantriebe weisen ferner ein relativ großes Gewicht auf. Außerdem treten im Betrieb erhebliche Geräusche auf.

Vor diesem Hintergrund liegt der Erfindung die Aufgabe zugrunde, einen verbesserten Felgengreifer zu offenbaren, bei dem ein Pneumatikantrieb vermieden wird.

Die Aufgabe der Erfindung wird durch einen Felgengreifer mit einem Flansch zur Befestigung an einer Handhabungseinrichtung, wie etwa einem Roboterarm, gelöst, an dem mindestens ein Felgengreifermodul aufgenommen ist, wobei jedes Felgengreifermodul einen länglichen Grundkörper aufweist, an dem mindestens eine sich parallel zu einer Längsrichtung des Grundkörpers erstreckende Linearführung aufgenommen ist, wobei mindestens ein erster entlang der Linearführung mittels eines elektrischen Antriebs verfahrbarer Ausleger vorgesehen ist, an dessen äußerem Ende ein erstes Haltemodul für eine Felge gehalten ist, und wobei mindestens ein entlang der Linearführung mittels eines elektrischen Antriebs unabhängig vom ersten Ausleger verfahrbarer zweiter Ausleger vorgesehen ist, an dessen äußerem Ende ein zweites Haltemodul für eine Felge gehalten ist.

Die Aufgabe der Erfindung wird auf diese Weise vollkommen gelöst.

Die Felge ist zwischen dem ersten und dem zweiten Haltemodul einklemmbar, die jeweils an einem verfahrbaren Ausleger gehalten sind, der mittels eines elektrischen Antriebs entlang einer Linearführung verfahrbar ist.

Auf diese Weise wird ein besonders einfaches und präzises Verfahren der Haltemodule unabhängig voneinander ermöglicht. Die im Stand der Technik verwendeten Pneumatikantriebe können vollständig entfallen. Dies führt zu einer erheblichen Gewichtseinsparung beim erfindungsgemäßen Felgengreifer. Ferner ermöglicht es der voneinander unabhängige elektrische Antrieb des ersten und des zweiten Auslegers, entweder beide Ausleger relativ zueinander zu verfahren, etwa um eine Felge aufzunehmen oder freizugeben, oder es können gleichzeitig auch beide Ausleger synchron zueinander verfahren werden, um bspw. eine Positionierung vorzunehmen oder aber um eine Felge bspw. auf einer Palette abzulegen oder davon aufzunehmen.

In bevorzugter Ausgestaltung der Erfindung ist an jedem Felgengreifermodul eine erste Linearführung vorgesehen, an welcher der erste Ausleger verfahrbar ist, sowie ferner eine zweite Linearführung vorgesehen, an welcher der zweite Ausleger verfahrbar ist.

Auf diese Weise ergibt sich eine einfache Konstruktion.

Gemäß einer weiteren Ausgestaltung der Erfindung ist zum Antrieb jedes Auslegers ein Zahntrieb, vorzugsweise ein Zahnstangentrieb, vorgesehen.

Diese Ausführung ermöglicht ein besonders einfaches und präzises Verfahren des Auslegers. Zum Antrieb kann der elektrische Antrieb unmittelbar mit einem Ritzel gekoppelt werden, das mit einer zugeordneten Zahnstange kämmt, wodurch der Ausleger verfahrbar ist.

Gemäß einer weiteren Ausführung der Erfindung weist jedes Haltemodul mindestens eine senkrecht zur Längsrichtung des Grundkörpers ausfahrbare Vertikalführung, vorzugsweise zwei zueinander parallele Vertikalführungen auf, an deren unterem Ende mindestens ein Kontaktelement zur Kontaktierung einer Felge vorgesehen ist.

Auf diese Weise ergibt sich eine besonders einfache Greifmöglichkeit zum Aufnehmen bzw. Freigeben einer Felge.

Gemäß einer weiteren Ausführung der Erfindung ist an mindestens einem Ausleger ein Sensor zur Erfassung einer Position der Vertikalführung vorgesehen.

Auf diese Weise kann ein Ausfahren der Vertikalführung überwacht werden, etwa um eine Crash-Situation zu verhindern.

Gemäß einem weiteren Merkmal der Erfindung ist jedes Kontaktelement als Rolle ausgebildet.

Hierdurch ergibt sich eine besonders einfache Möglichkeit zum Aufnehmen einer Felge.

Gemäß einer weiteren Ausgestaltung der Erfindung ist mindestens ein Kontaktelement rotierend antreibbar.

Dies ermöglicht eine weiter verbesserte Handhabung einer Felge beim Ergreifen und eine Ausrichtung in eine bestimmte Winkelposition.

Gemäß einer weiteren Ausgestaltung der Erfindung ist an jeder Vertikalführung eine elektrische und/oder magnetische Klemmung zur Fixierung der Vertikalführung vorzugsweise in einer eingefahrenen Position vorgesehen.

Auf diese Weise kann die Vertikalführung vorzugsweise in einer eingefahrenen Position arretiert werden. Nach Freigabe der Klemmung kann die Vertikalführung unter dem Eigengewicht der Felge nach unten hin ausfahren.

In vorteilhafter Weiterbildung dieser Ausführung weist die Klemmung einen Magnet auf, der die Vertikalführung in einer eingefahrenen Position sichert.

Vorzugsweise ist der Magnet V-förmig oder U-förmig ausgebildet und umschließt eine Führungsstange der Vertikalführung.

Hierbei wird eine hohe Magnetspannkraft gewährleistet.

Gemäß einer weiteren Ausgestaltung der Erfindung ist der Magnet elektrisch entmagnetisierbar, um ein Ausfahren der Vertikalführung zu erlauben.

Auf diese Weise ergeben sich eine besonders einfache und zuverlässige Fixierung der Vertikalführung in der eingefahrenen Position und ein Freigeben bei Entmagnetisierung.

Gemäß einer weiteren Ausgestaltung der Erfindung sind die Positionen der ersten und zweiten Ausleger mittels der elektrischen Antriebe bestimmbar.

Dies ermöglicht auf besonders einfache Weise ein Anfahren vorgegebener Positionen.

Der Felgengreifer weist vorzugsweise eine Steuerung auf, die vorzugsweise sowohl ein Verfahren der Haltemodule relativ zueinander zum Ergreifen oder Freigeben einer Felge erlaubt, als auch ein simultanes Verfahren der Haltemodule, um die Felge in Horizontalrichtung zu positionieren.

Die Steuerung ist vorzugsweise unmittelbar am Felgengreifer vorgesehen und kann mit mehreren Felgengreifermodulen gekoppelt werden.

Gemäß einer weiteren Ausgestaltung der Erfindung weist der Felgengreifer eine Mehrzahl von Felgengreifermodulen auf, vorzugsweise zwei Felgengreifermodule oder ein ganzzahliges Vielfaches davon.

Die Felgengreifermodule sind vorzugsweise leicht austauschbar am Felgengreifer aufgenommen. Hierzu müssen lediglich Schrauben gelöst werden und ein Stecker zum Lösen der elektrischen Verbindung abgezogen werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine perspektivische Gesamtansicht des erfindungsgemäßen Felgengreifers von schräg oben gesehen;
- Fig. 2: eine perspektivische Gesamtansicht des Felgengreifers gemäß Fig. 1 von schräg unten aus gesehen;

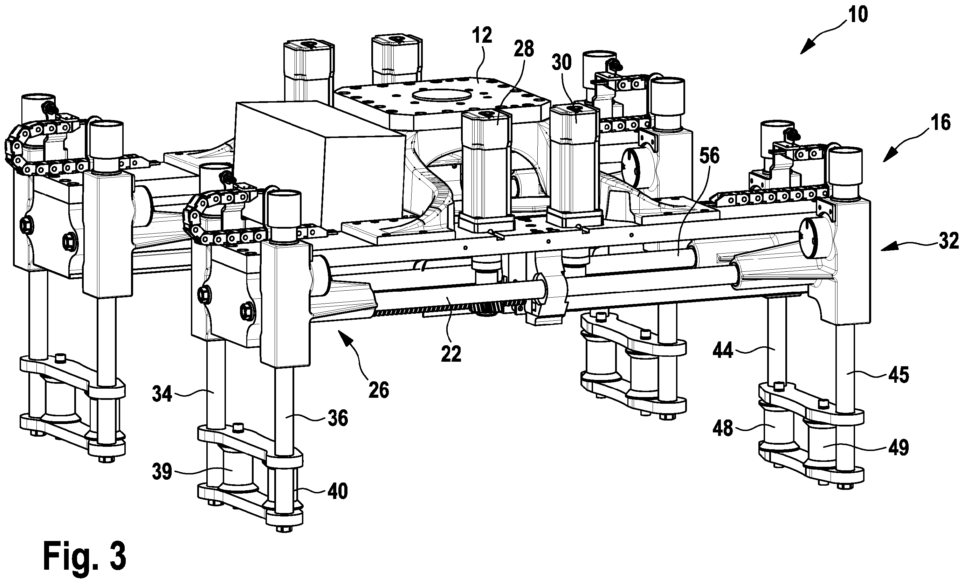

- Fig. 3: eine perspektivische Gesamtansicht des Felgengreifers gemäß Fig. 1 von schräg vorn aus gesehen;
- Fig. 4: eine Seitenansicht des Felgengreifermoduls gemäß Fig. 1;
- Fig. 5: einen Schnitt durch den Felgengreifer gemäß Fig. 4 links der Linie V-V;
- Fig. 6: einen Schnitt durch den Felgengreifer gemäß Fig. 4 links der Linie VI-VI;

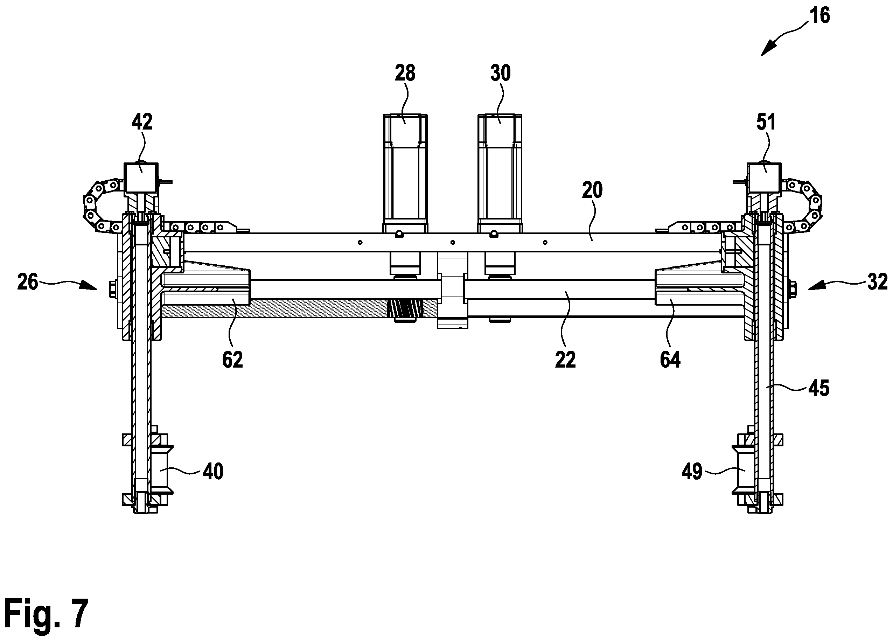

- Fig. 7: einen Längsschnitt durch den Felgengreifer gemäß Fig. 4;
- Fig. 8: einen vergrößerten Teilschnitt des Felgengreifermoduls gemäß Fig. 7;
- Fig. 9: einen vergrößerten Detailschnitt aus Fig. 5 und
- Fig. 10: eine gegenüber der Ausführung gemäß Fig. 1 leicht abgewandelte Ausführung des Felgengreifermoduls, wobei nur der rechte Teil dargestellt ist.

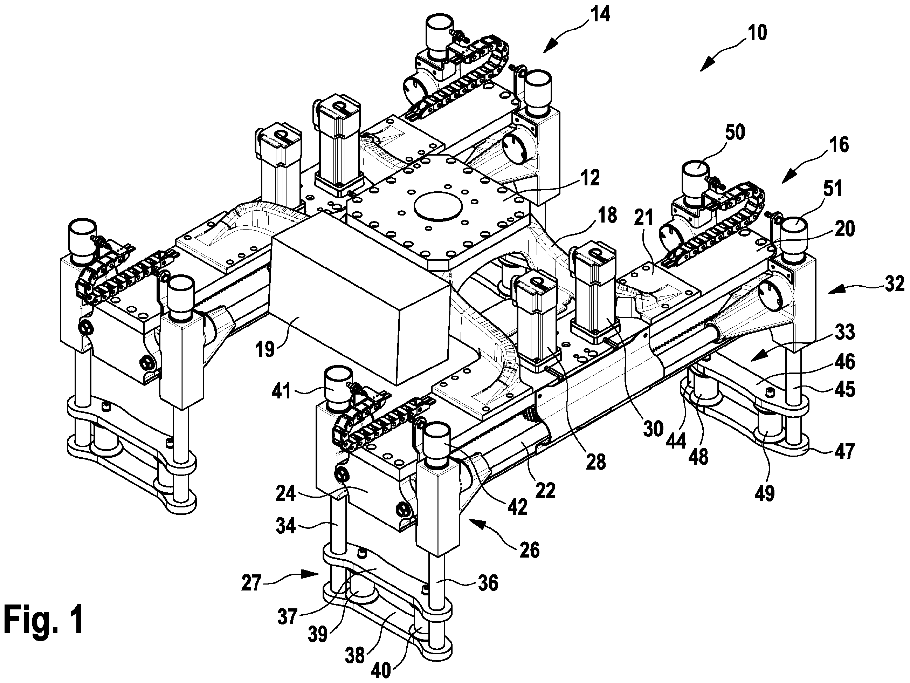

In Fig. 1 ist ein erfindungsgemäßer Felgengreifer perspektivisch dargestellt und insgesamt mit der Ziffer 10 bezeichnet.

Der Felgengreifer 10 weist einen Flansch 12 auf, der zur Verbindung mit einer Handhabungseinrichtung, etwa einem Roboterarm oder einem Portal, vorgesehen ist. Am Flansch 12 ist ein grundsätzlich H-förmiger Grundträger 18 befestigt, an dessen beiden einander gegenüberliegenden Enden je ein Felgengreifermodul 14, 16 befestigt ist. Die beiden Felgengreifermodule 14, 16 sind bevorzugt identisch aufgebaut und können zur Handhabung von gleich großen oder unterschiedlichen großen Felgen nacheinander oder gleichzeitig verwendet werden.

Im Folgenden wird nur das Felgengreifermodul 16 näher erläutert.

An jedem Felgengreifer 10 sind vorzugsweise zwei oder ein ganzzahliges Vielfaches davon Felgengreifermodule 14, 16 aufgenommen.

Auf diese Weise können mit Hilfe einer einzigen Handhabungseinrichtung gleichzeitig mehrere Felgen gehandhabt werden. Sämtliche Felgengreifermodule 14, 16 eines Felgengreifers 10 können mittels einer gemeinsamen Steuerung 19 gesteuert werden.

Jedes Felgengreifermodul 14, 16 ist mit Hilfe eines länglichen, plattenförmigen Grundkörpers 20 an zugeordneten Platten 21 des Grundträgers 18 aufgenommen, vorzugsweise damit verschraubt. Es ergibt sich eine leichte Austauschbarkeit durch Lösen der Verschraubungen und eines Anschlusskabels zur Verbindung mit der Steuerung 19.

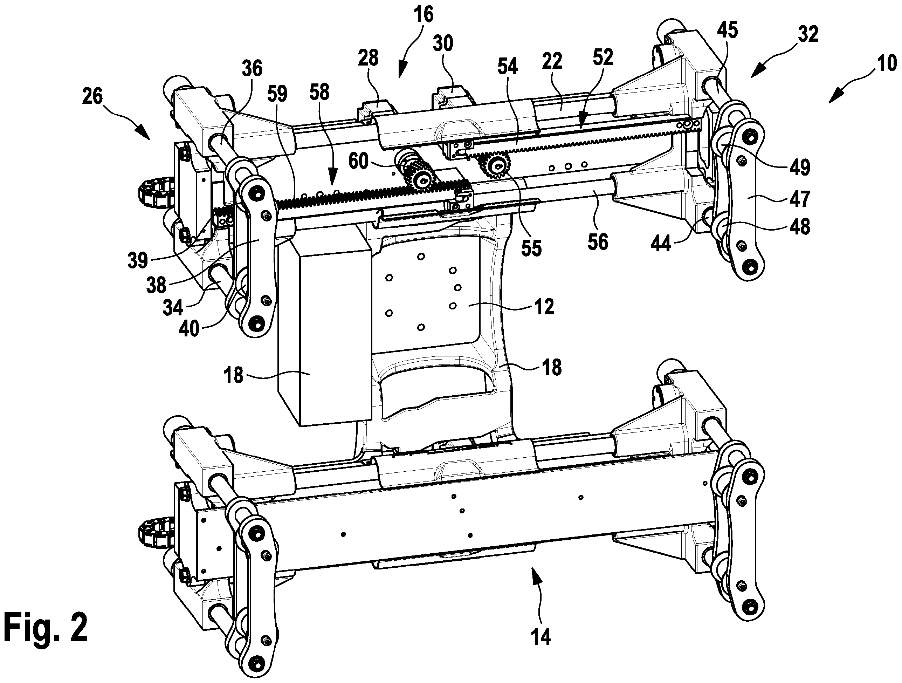

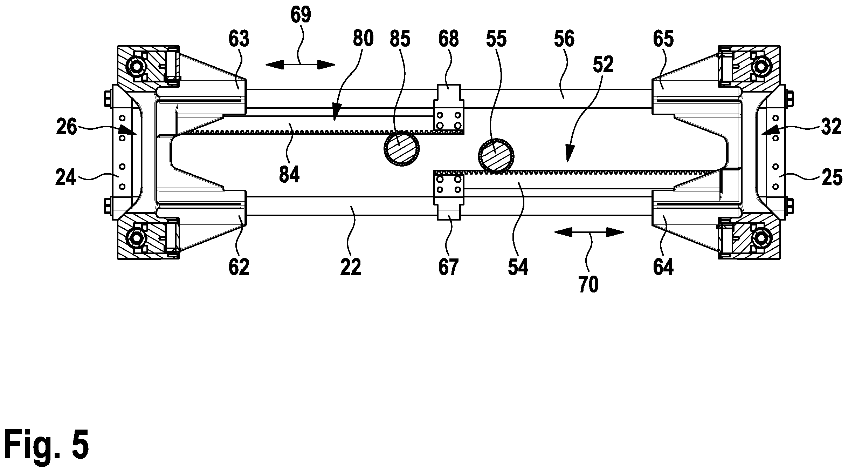

Zum Antrieb des Felgengreifermoduls 16 sind zwei Elektromotoren 28, 30 vorgesehen, die auf den Grundkörper 20 aufrecht stehend montiert sind. Am länglichen Grundkörper 20 sind zwei zueinander parallele Linearführungen 22, 56 vorgesehen, die mit endseitigen Aufnahmeplatten 24, 25 verschraubt sind, die von den Enden des Grundkörpers 20 aus senkrecht nach unten hervorstehen (in Fig. 1 ist lediglich die äußere Linearführung 22 erkennbar, während die dazu parallele Linearführung 56 auf der anderen Seite aus Fig. 2 erkennbar ist; die zweite Aufnahmeplatte 25 am der ersten Aufnahmeplatte 24 gegenüberliegenden Ende des Grundkörpers ist aus Fig. 5 ersichtlich).

An den beiden Linearführungen 22, 56 sind ein erster Ausleger 26 und ein zweiter Ausleger 32 unabhängig voneinander mittels der Elektromotoren 28, 30 verfahrbar, wie im Folgenden noch näher erläutert wird.

Am ersten Ausleger 26 und am zweiten Ausleger 32 ist ein erstes Haltemodul 27 bzw. ein zweites Haltemodul 33 vorgesehen, das zur Verbindung mit einer Felge ausgebildet ist. Hierzu weist das erste Haltemodul 27 eine erste Vertikalführung 34 auf der einen Außenseite und eine dazu parallele Vertikalführung 36 auf der anderen Außenseite auf. Am unteren Ende der Vertikalführungen 34, 36 sind zwei zueinander parallele Querträger 37, 38 aufgenommen, zwischen denen jeweils ein Kontaktelement 39, 40 in Form einer Rolle drehbar gehalten ist. Die Kontaktelemente 39, 40 dienen zur Anlage an einer Felge. In entsprechender Weise weist das zweite Haltemodul 33 am zweiten Ausleger 32 zwei Vertikalführungen 46, 47 auf, an deren unterem Ende zwei zueinander parallele Querträger 37, 38 aufgenommen sind, zwischen denen jeweils ein Kontaktelement 47, 48 in Form einer Rolle drehbar gehalten ist.

Aus Fig. 2 und insbesondere Fig. 5 ist der Antrieb zur Bewegung der beiden Ausleger 26, 32 entlang der Linearführungen 22, 56 erkennbar.

Der Antrieb des ersten Auslegers 26 und des zweiten Auslegers 32 erfolgt jeweils mittels eines Zahntriebs 80 bzw. 52. Jeder Zahntrieb 80, 52 weist eine Zahnstange 84 bzw. 54 auf, die mit dem ersten Ausleger 26 bzw. mit dem zweiten Ausleger 32 gekoppelt ist. Mit der betreffenden Zahnstange 84 bzw. 54 kämmt ein Ritzel 85 bzw. 55, das unmittelbar von dem zugehörigen Elektromotor 28 bzw. 30 angetrieben ist.

Der erste Ausleger 26 ist mittels Stützlagern 62, 63 an den Linearführungen 22 bzw. 56 geführt. Ferner ist die Zahnstange 84 mittels eines Stützlagers 68 (Dreipunkt-Abstützung) an der Linearführung 56 abgestützt. Durch Antrieb des Ritzels 85 mittels des Elektromotors 28 kann der erste Ausleger 26 entlang der Linearführungen 22 bzw. 56 in Richtung des Pfeiles 69 hin und her verfahren werden (vgl. Fig. 5).

In entsprechender Weise ist der zweite Ausleger 32 mittels Stützlagern 64, 65 an den Linearführungen 22 bzw. 56 abgestützt. Der Zahntrieb 52 weist eine Zahnstange 54 auf, die zum Antrieb des Auslegers 32 dient und die mit einem Ritzel 55 kämmt, das unmittelbar vom Antriebsmotor 30 angetrieben ist. Die Zahnstange 54 ist mittels eines Stützlagers 67 (Dreipunkt-Abstützung) an der Linearführung 52 abgestützt.

Somit kann auch der zweite Ausleger 32 mittels des Antriebsmotors 30 in Richtung des Pfeils 70 entlang der Linearführungen 22, 56 hin und her verfahren werden.

Die beiden Zahntriebe 52, 80 sind selbsthemmend ausgebildet, so dass keine besonderen Maßnahmen bezüglich einer Bremsung bei Stromausfall getroffen werden müssen.

Der Fahrweg der beiden Ausleger 26, 32 ist über die Position der Elektromotoren 28, 30 erfassbar. Handelt es sich bspw. um Servomotoren, welche die Kontrolle der Winkelposition der Motorwelle erlauben, so kann über die Anzahl der Umdrehungen die absolute Position des zugehörigen Auslegers 26, 32 erfasst werden. Somit können mittels der Steuerung 19 gewünschte Absolutpositionen angefahren werden.

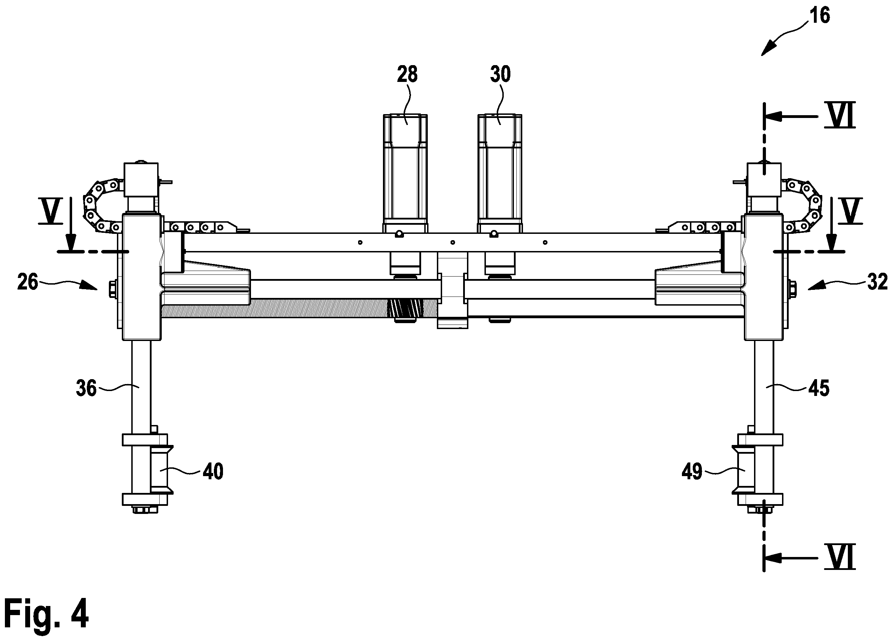

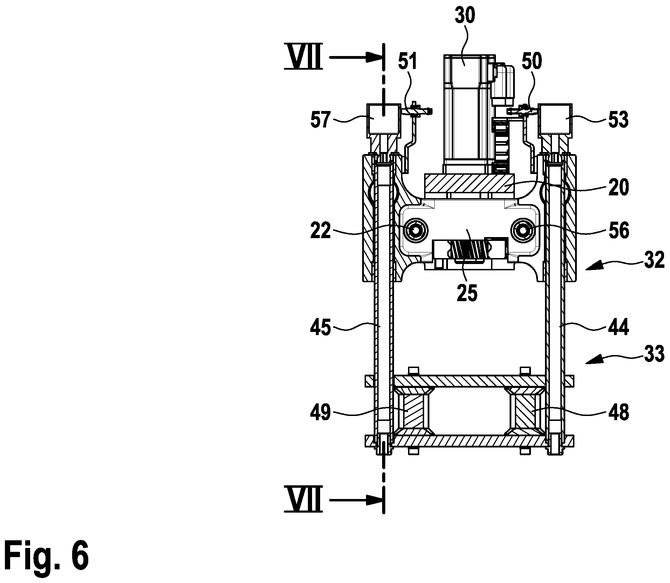

Fig. 6 zeigt einen endseitigen Querschnitt durch den zweiten Ausleger 32 gemäß der Linie VI-VI gemäß Fig. 4.

Hieraus ist die Abstützung des Auslegers 32 an den beiden Linearführungen 22, 56 erkennbar.

Ferner ist das Haltemodul 33 erkennbar, dass sich mittels der beiden Vertikalführungen 44, 45 vom Ende des zweiten Auslegers 32 aus nach unten erstreckt, um an eine Kontaktierung der Felge mittels der Kontaktelemente 48, 49 zu ermöglichen.

Die Vertikalführungen 44, 45 weisen an ihrem oberen Ende jeweils einen Sensor 50, 51 auf, mittels dessen die vertikale Position der Vertikalführungen 44, 45 überwacht werden kann. Bei den Sensoren 50, 51 kann es sich etwa um induktive Sensoren handeln, die registrieren, ob sich ein Kontakt mit dem zugehörigen Sensortopf 53, 57 ergibt.

In der Fig. 6 gezeigten Position sind die Vertikalführungen 44, 45 vollständig nach unten ausgefahren. Beim Anheben der Vertikalführungen 44, 45 ergibt sich eine Toleranz, bis die Sensorköpfe 53, 57 über die Sensoren 50, 51 nach oben hinausgefahren sind.

Entsprechende Sensoren 41, 42 sind an den Vertikalführungen 34, 36 des ersten Auslegers 26 vorgesehen (vgl. Fig. 1).

Beim Aufnehmen einer Felge wird mit vollständig nach unten ausgefahrenen Vertikalführungen 34, 36 bzw. 44, 45 gearbeitet. Die Felge wird in dieser Position aufgenommen, indem die beiden Ausleger 26, 32 aufeinander zu verfahren werden, bis die Felge mit den Kontaktelementen 39, 40 bzw. 48, 49 gehalten ist. Anschließend verfährt die Handhabungseinrichtung, bspw. der Roboter, zur Fördertechnik. Dort wird dann die Felge abgelegt, wobei die Felge etwas zu tief verfahren wird, was von einer Toleranz von etwa 2 cm an den Sensoren 41, 42 bzw. 50, 51 nicht erfasst wird. Die Felge liegt dann auf. Anschließend wird eine vorherige magnetische Arretierung der Vertikalführungen 34, 36 bzw. 44, 45 gelöst, so dass die Vertikalführungen beim Anheben nach unten ausfahren können, um sich nach einer Freigabe der Felge durch Auseinanderfahren der Ausleger 26, 32 von der Felge zu lösen.

Die Sensoren 41, 42, 50, 51 dienen gleichzeitig als Crash-Sensoren, um Crash-Situationen bei der Handhabung einer Felge zu vermeiden.

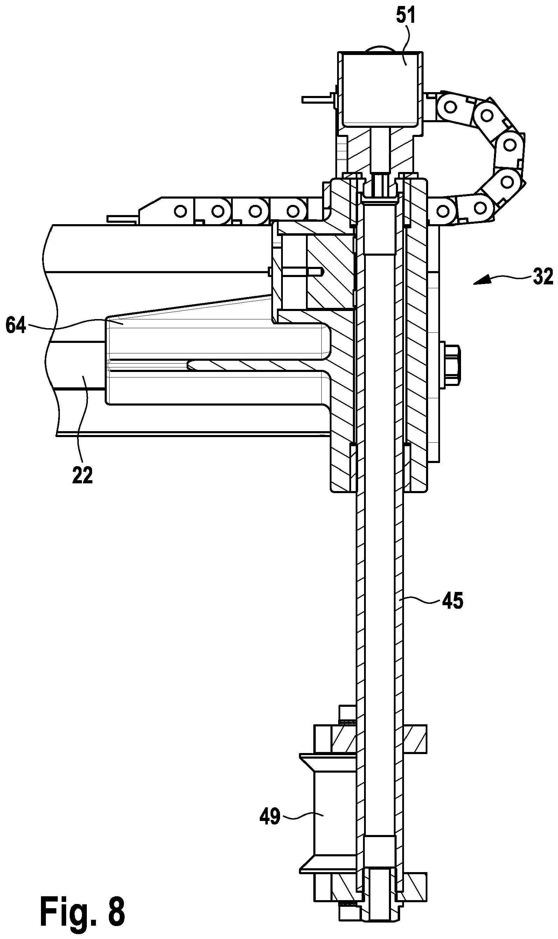

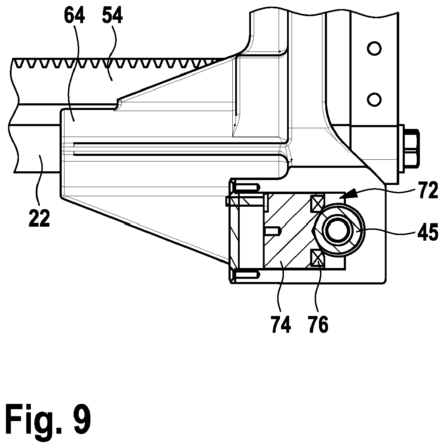

Aus den Figuren 8 und 9 ist eine magnetische Klemmung 72 zur Arretierung der Vertikalführung 45 erkennbar. Die Klemmung 72 weist gemäß Fig. 9 einen V-förmigen Magneten 74 auf, der unmittelbar an der Oberfläche der Stange der Vertikalführung 45 anliegt. Zusätzlich ist eine Spule 76 vorgesehen, mittels derer der Magnet 74 entmagnetisiert werden kann. Ist die Spule 76 nicht aktiviert, so wird die Vertikalführung 45 magnetisch in der betreffenden Position arretiert. Wird die Spule 76 aktiviert, so wird der Manget 74 entmagnetisiert, so dass sich die Vertikalführung 45 frei in Vertikalrichtung bewegen kann.

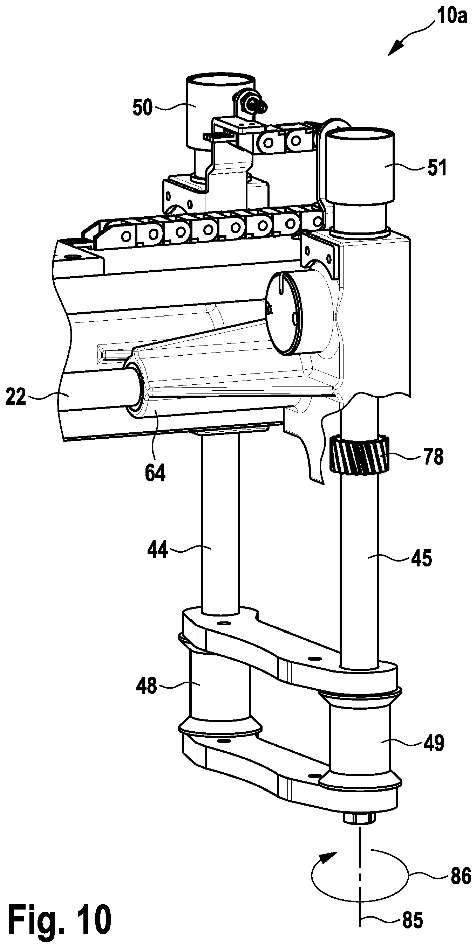

In Fig. 10 ist eine Variante des Felgengreifers angedeutet und insgesamt mit der Ziffer 10a bezeichnet.

Hierbei werden für entsprechende Teile entsprechende Bezugsziffern verwendet.

Die Kontaktelemente 48, 49 sind bei der Ausführung gemäß Fig. 10 mit den Längsführungen 44, 45 ausgerichtet. Eine der Vertikalführungen, 45, kann zusätzlich um ihre Längsachse 85 angetrieben werden, wie durch einen Pfeil 86 angedeutet ist. Hierzu kann bspw. ein Ritzel 78 an der Vertikalführung 45 vorgesehen sein, das (in nicht dargestellter Weise) von einem der Elektromotoren 28, 30 angetrieben wird.

Die Haltekraft einer Felge ist durch die Steuerung der beiden Ausleger 26, 32 einstellbar und kann zusätzlich mittels eines Sensors (nicht dargestellt) gemessen werden.

Mit dem erfindungsgemäßen Felgengreifer können mit einem Felgengreifermodul 14, 16 unterschiedlich große Felgen ergriffen werden. Außerdem kann eine aufgenommene Felge im gespannten Zustand hin- und herbewegt werden, um bspw. eine Ablage auf einer Palette zu erlauben oder um ein Anfahren einer bestimmten Position zu ermöglichen.

## Patentansprüche

1. Felgengreifer mit einem Flansch (12) zur Befestigung an einer Handhabungseinrichtung, wie etwa einem Roboterarm, an dem mindestens ein Felgengreifermodul (14, 16) aufgenommen ist, wobei jedes Felgengreifermodul (14, 16) einen länglichen Grundkörper (20) aufweist, an dem mindestens eine sich parallel zu einer Längsrichtung des Grundkörpers erstreckende Linearführung (22, 56) aufgenommen ist, wobei mindestens ein erster entlang der Linearführung (22, 56) mittels eines elektrischen Antriebs (28, 30) verfahrbarer Ausleger (26) vorgesehen ist, an dessen äußerem Ende ein erstes Haltemodul (27) für eine Felge gehalten ist, und wobei mindestens ein entlang der Linearführung (22, 56) mittels eines elektrischen Antriebs (28, 30) unabhängig vom ersten Ausleger (26) verfahrbarer zweiter Ausleger (32) vorgesehen ist, an dessen äußerem Ende ein zweites Haltemodul (33) für eine Felge gehalten ist.

2. Felgengreifer nach Anspruch 1, bei dem an jedem Felgengreifermodul (14, 16) eine erste Linearführung (22) vorgesehen ist, an welcher der erste Ausleger (26) verfahrbar ist, sowie ferner eine zweite Linearführung (56) vorgesehen ist, an welcher der zweite Ausleger (32) verfahrbar ist.

3. Felgengreifer nach Anspruch 1 oder 2, bei dem zum Antrieb jedes Auslegers (26, 32) ein Zahntrieb (52, 58), vorzugsweise ein Zahnstangentrieb, vorgesehen ist.

4. Felgengreifer nach einem der vorhergehenden Ansprüche, bei dem jedes Haltemodul (27, 33) mindestens eine senkrecht zur Längsrichtung des Grundkörpers (20) ausfahrbare Vertikalführung (34, 36), vorzugsweise zwei zueinander parallele Vertikalführungen (34, 36), aufweist, an deren unterem Ende mindestens ein Kontaktelement (39, 40, 48, 49) zur Kontaktierung einer Felge vorgesehen ist.

5. Felgengreifer nach Anspruch 4, bei dem an mindestens einem Ausleger (26, 32) ein Sensor (41, 42, 50, 51) zur Erfassung einer Position der Vertikalführung (34, 36, 44, 45) vorgesehen ist.

6. Felgengreifer nach einem der vorhergehenden Ansprüche, bei dem jedes Kontaktelement (39, 40, 48, 49) als Rolle ausgebildet ist.

7. Felgengreifer nach einem der vorhergehenden Ansprüche, bei dem mindestens ein Kontaktelement (39, 40, 48, 49) rotierend antreibbar ist.

8. Felgengreifer nach einem der vorhergehenden Ansprüche, bei dem an jeder Vertikalführung (34, 36, 44, 45) eine elektrische und/oder magnetische Klemmung (72) zur Fixierung der Vertikalführung (34, 36, 44, 45) vorzugsweise in einer eingefahrenen Position vorgesehen ist.

9. Felgengreifer nach Anspruch 8, bei dem die Klemmung (72) einen Magnet (74) aufweist, der die Vertikalführung (34, 36, 44, 45) in einer eingefahrenen Position sichert.

10. Felgengreifer nach Anspruch 9, bei dem der Magnet (74) V-förmig oder U-förmig ausgebildet ist und eine Führungsstange der Vertikalführung (34, 36, 44, 45) umschließt.

11. Felgengreifer nach einem der Ansprüche 9 bis 10, bei dem der Magnet (74) elektrisch entmagnetisierbar ist, um ein Ausfahren der Vertikalführung (34, 36, 44, 45) zu erlauben.

12. Felgengreifer nach einem der vorhergehenden Ansprüche, bei dem die Positionen der ersten und zweiten Ausleger (26, 32) mittels der elektrischen Antriebe (28, 30) bestimmbar sind.

13. Felgengreifer nach einem der vorhergehenden Ansprüche, mit einer Steuerung (19), die sowohl ein Verfahren der Haltemodule (27, 33) relativ zueinander zum Ergreifen oder Freigeben einer Felge erlaubt, als auch ein simultanes Verfahren der Haltemodule (27, 33), um die Felge in Horizontalrichtung zu positionieren.

14. Felgengreifer nach einem der vorhergehenden Ansprüche, mit einer Mehrzahl von Felgengreifermodulen (14, 16), vorzugsweise mit 2 Felgengreifermodulen (27, 33) oder einem ganzzahligen Vielfachen davon.
